# EUROPÄISCHE PATENTSCHRIFT

(11) **EP 2 241 476 B1**
(45) Veröffentlichungstag und Bekanntmachung des Hinweises auf die Patenterteilung: **23.11.2011**
(21) Anmeldenummer: 10002717.6
(22) Anmeldetag: 16.03.2010
(51) Int. Cl.: B60N 2/28, B60R 22/10, B60R 22/195

(54) **Fahrzeugkindersitz**
Vehicle child's seat
Siège enfant pour véhicule

(30) Priorität: 16.04.2009 DE 102009017601
(43) Veröffentlichungstag der Anmeldung: 20.10.2010
(73) Patentinhaber: Recaro GmbH & Co. KG, 73230 Kirchheim/Teck (DE)
(72) Erfinder: Vogt, Thomas, 89171 Illerkirchberg (DE); Gebhardt, Stefan, 95466 Weidenberg (DE); Pöhner, Jens, 95346 Stadtsteinach (DE)
(74) Vertreter: Daub, Thomas

(56) Entgegenhaltungen:
- WO-A1-2008/056169
- DE-A1- 10 251 040
- DE-A1- 19 722 096
- DE-A1- 19 848 231
- DE-A1-102006 011 520
- DE-U1-202005 013 257
- US-A1- 2007 228 787

## Beschreibung

Die Erfindung betrifft einen Fahrzeugkindersitz mit den Merkmalen des Oberbegriffs des Anspruches 1.

Fahrzeugkindersitze, wie sie beispielsweise für die Sicherung von Kindern in Personenkraftwagen verwendet werden, sind allgemein bekannt. Zur Sicherung des Kindes im Kindersitz wird entweder das fahrzeugeigene oder ein kindersitz-integriertes Gurtsystem verwendet. Der Kindersitz wird im Fahrzeug entweder direkt auf den Fahrzeugsitz positioniert oder indirekt auf einer im Fahrzeug befestigten Kindersitzbasis, wie diese beispielsweise aus der DE 10 2006 011 520 A1 bekannt ist. Die Befestigung des Kindersitzes und gegebenenfalls der Kindersitzbasis im Fahrzeug erfolgt mittels des Fahrzeuggurtes oder einem unter der Bezeichnung ISOFIX bekannten Befestigungssystem.

Gurtstraffer für erwachsene Insassen von Personenkraftwagen zählen zu den sogenannten passiven Sicherheitssystemen. Gurtstraffer straffen unmittelbar vor oder während eines Unfalls die Sicherheitsgurte. Durch das Straffen des Gurtes und dem daraus resultierenden engeren Anliegen des Gurtes am Körper des Insassens nimmt dieser frühzeitig an der Verzögerung des Fahrzeuges teil und ein Durchtauchen unter dem Beckengurt wird verhindert. Um die Kräfte auf den Insassen durch das Gurtsystem zu begrenzen, können die Gurtstraffer mit sogenannten Gurtkraftbegrenzern kombiniert sein, die ab einer definierten Gurtkraft beispielsweise ein gezieltes Abspulen des Gurtbandes aus einem Gurtaufroller bewirken.

Eine optimale Rückhaltewirkung eines Kindes in einem Fahrzeugkindersitz mit integriertem Gurtsystem setzt ebenfalls ein möglichst enges Anliegen des Gurtes am Körper voraus. Somit ist es vorteilhaft, die Funktion der Gurtstraffung auch in einen Kindersitz zu integrieren.

Aus der DE 197 22 096 A1 ist ein Fahrzeugkindersitz bekannt, der eine Rückhalte-vorrichtung bestehend aus integriertem Gurtsystem und Gurtstrafferanordnung aufweist. Zur Auslösung der Gurtstrafferfunktion des Kindersitzes werden eine Sensoreinrichtung sowie eine Steuereinheit benötigt, von denen zumindest die Steuereinheit außerhalb des Kindersitzes fest im Fahrzeug integriert ist. Bei der Montage des Kindersitzes in das Fahrzeug muss dieser daher mittels lösbarer Steckverbindungen an die Steuereinheit des Fahrzeuges angeschlossen werden. Erfolgt dies versehentlich nicht, ist die Gurtstrafferanordnung ohne Funktion. Dieser Fehler soll durch zusätzliche Überwachungsmittel ausgeschlossen werden.

Die DE 102 51 040 A1 offenbart eine Kopplungsvorrichtung zwischen dem fahrzeugeigenen Gurtstraffersystem und dem kindersitzintegrierten Gurtsystem. Eine separate Gurtstraffervorrichtung im Kindersitz ist nicht vorgesehen. Die optimale Rückhaltewirkung des Kindersitzgurtsystems ist damit vom Vorhandensein eines Gurtstraffers im Fahrzeug abhängig. Dies ist aber insbesondere bei Fondsitzen von Personenkraftwagen häufig nicht der Fall, so dass der Einsatz des Kindersitzes auf bestimmte Fahrzeugmodelle und/oder auf die Vordersitze beschränkt bleibt.

Die DE 20 2005 013 257 U1 offenbart eine Gurtkraftbegrenzungsfunktion gemäß welcher im Crashfall bei Überschreiten einer Grenzkraft der Gurt gedämpft verlängert wird. Ein Gurtstraffer ist hierbei nicht vorgesehen.

Aus der US 2007 / 0 228 787 A1 ist ein Fahrzeugkindersitz zum direkten Befestigen an einem Fahrzeugsitz bekannt, mit einer Lehne, einer Sitzfläche, einem integrierten Gurtsystem (10) zum Fixieren eines Kindes im Fahrzeugkindersitz und einer eine Auslösesensorik, einen Kraftspeicher und eine Straffermechanik umfassenden Gurtstraffervorrichtung, die beim Überschreiten einer definierten, auf den Fahrzeugkindersitz wirkenden Kraft, insbesondere Crashkraft, das Gurtsystem schlagartig strafft. Diese Patentschrifft offenbart einen Fahrzeugkindersitz nach dem Oberbegriff des Anspruchs 1.

Der Erfindung liegt die Aufgabe zu Grunde, einen Fahrzeugkindersitz mit Gurtstrafferfunktion insbesondere hinsichtlich seiner universellen Verwendung und der Vermeidung von Montagefehlern zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass sämtliche für die Gurtstrafferfunktion notwendigen Bauteile der Gurtstraffervorrichtung am oder im Kindersitz befestigt und mit diesem aus dem Fahrzeug entnehmbar sind, ist der Kindersitz universell in allen Fahrzeugmodellen und auf sämtlichen Sitzplätzen nutzbar. Das Anschließen des Kindersitzes an fahrzeugintegrierte Gurtstraffer, Sensoreinrichtungen oder Steuerungseinheiten entfällt, wodurch Fehler bei der Montage des Kindersitzes in das Fahrzeug vermieden werden. Die Überprüfung der Funktionsfähigkeit der Gurtstraffervorrichtung kann außerhalb des Fahrzeuges erfolgen, da der Kindersitz ein autarkes System darstellt. Eine in der Gurtstraffervorrichtung integrierte, zusätzliche Gurtkraftbegrenzung begrenzt die auf ein im Kindersitz angegurtetes Kind wirkenden Gurtkräfte wirkungsvoll. Während oder zeitlich unmittelbar nach der Gurtstraffung geben einzelne Gurtabschnitte des Gurtsystems beim Überschreiten einer Grenzkraft wieder gezielt nach, so dass Verletzungen des Kindes aufgrund zu hoher Gurtkräfte vermieden werden.

In bevorzugter Ausführung ist die Gurtstraffervorrichtung ein mechanisches System, bei dem die Auslösesensorik eine Sensormasse umfasst, deren Trägheitskraft im Crashfall die Gurtstraffervorrichtung auslöst. Aufgrund des rein mechanischen Aufbaus ist keine externe oder interne Energieversorgung des Kindersitzes notwendig. Der für die Gurtstrafferfunktion notwendige Kraftspeicher wird vorzugsweise durch eine oder mehrere Federn gebildet; grundsätzlich deckt die vorliegende Erfindung aber auch pyrotechnische, hydraulische oder pneumatische Systeme ab.

Die Gurtstraffung im Crashfall resultiert aus einer räumlichen Verschiebung einer ersten Gurtumlenkung, die einen Gurtabschnitt des integrierten Gurtsystems umlenkt.

Mittels einer zweiten Gurtumlenkung kann ein Flaschenzug gebildet werden, der gegenüber der Bewegung der ersten Gurtumlenkung eine größere Bewegung, d.h. Straffung des Gurtsystems bewirkt.

Die Gurtstraffervorrichtung ist grundsätzlich für die Integration in alle Kindersitztypen und für sämtliche Altersklassen vom Neugeborenen über Kleinkinder bis hin zu Kindern im Alter von bis zu 12 Jahren und für einen Einsatz in oder entgegen der Fahrtrichtung geeignet. Die erfindungsgemäßen Fahrzeugkindersitze sind insbesondere Kraftfahrzeugkindersitze für den Einsatz in Personenkraftwagen, Kleinbussen, Bussen, Schienenfahrzeugen oder Flugzeugen. Es ist jedoch auch eine Ausgestaltung für andere Fahrzeuge, insbesondere Fahrräder, möglich.

Im folgenden ist die Erfindung anhand zweier in den Zeichnungen dargestellter Ausführungsbeispiele näher erläutert. Es zeigen
- Fig. 1: eine perspektivische Ansicht des Fahrzeugkindersitzes von schräg vorne,
- Fig. 2: eine perspektivische Ansicht des Fahrzeugkindersitzes von schräg hinten,
- Fig. 3: eine perspektivische Ansicht des Fahrzeugkindersitzes von schräg unten, wobei die Gurtstraffervorrichtung vereinfacht und schematisch dargestellt ist,
- Fig. 4: eine schematische Darstellung des Verstellgurtverlaufes eines ersten Ausfüh- rungsbeispiels im Normalzustand und gestrichelt in ausgelöstem Zustand,
- Fig. 5: die Gurtstraffervorrichtung des ersten Ausführungsbeispiels im Normalzu- stand,
- Fig. 6: die Gurtstraffervorrichtung des ersten Ausführungsbeispiels im ausgelösten Zustand,
- Fig. 7: eine schematische Darstellung des Verstellgurtverlaufes eines zweiten Ausfüh- rungsbeispiels im Normalzustand und gestrichelt in ausgelöstem Zustand,
- Fig. 7a: Einzelheit VII aus Fig. 7
- Fig. 7b: Einzelheit entsprechend Fig. 7 nach erfolgter Gurtkraftbegrenzung
- Fig. 8: die Gurtstraffervorrichtung des zweiten Ausführungsbeispiels im Normalzu- stand,
- Fig. 9: die Gurtstraffervorrichtung des zweiten Ausführungsbeispiels im ausgelösten Zustand,

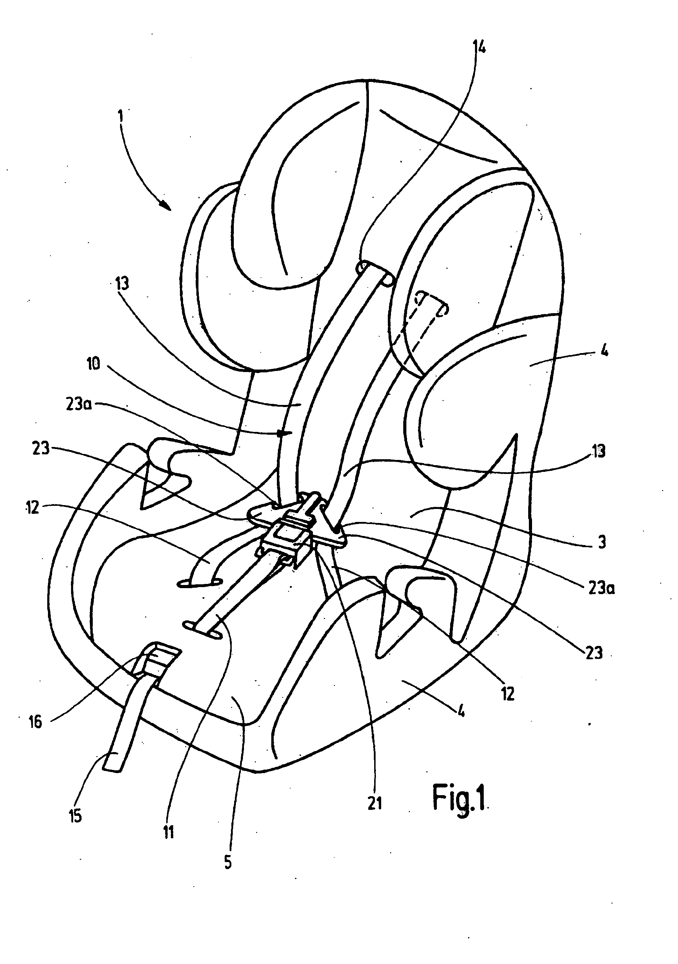

Ein in Fig. 1 dargestellter Fahrzeugkindersitz (1) für den Transport von Kleinkindern oder Kindern wird bei der Montage ins Fahrzeug in Fahrtrichtung unmittelbar auf dem Fahrzeugsitz positioniert und über das vorhandene Fahrzeuggurtsystem, insbesondere einen 3-Punkt-Gurt, fixiert. Alternativ kann der Kindersitz mittels einer am Fahrzeugsitz oder an der Fahrzeugstruktur befestigten Kindersitzbasis indirekt an dem Fahrzeugsitz befestigt werden. In Abwandlung der nachfolgend beschriebenen Ausführungsbeispiele kann der Fahrzeugkindersitz auch mittels eines mechanischen Schnellbefestigungssystems, wie es beispielsweise unter der Bezeichnung ISOFIX bekannt ist, am Fahrzeugsitz oder der Kindersitzbasis befestigt werden. ISOFIX ist in der ISO-Norm 13216 normiert.

Die nachfolgend verwendeten Richtungsangaben beziehen sich auf die Montage des Fahrzeugkindersitzes auf den Fahrzeugsitz in üblicher Fahrtrichtung des Fahrzeugs. Die Struktur des Kindersitzes 1 besteht aus einer gepolsterten Kunststoff-Sitzschale, die im wesentlichen in die Bereiche Lehne 3 und Sitzfläche 5 unterteilt ist, die einteilig miteinander verbunden sind oder alternativ mittels eines horizontalen Scharniers gegeneinander schwenkbar und verriegelbar sind. Die seitliche Abstützung des Kindes erfolgt durch je eine Seitenabstützung 4 links und rechts der Lehne 3 und der Sitzfläche 5.

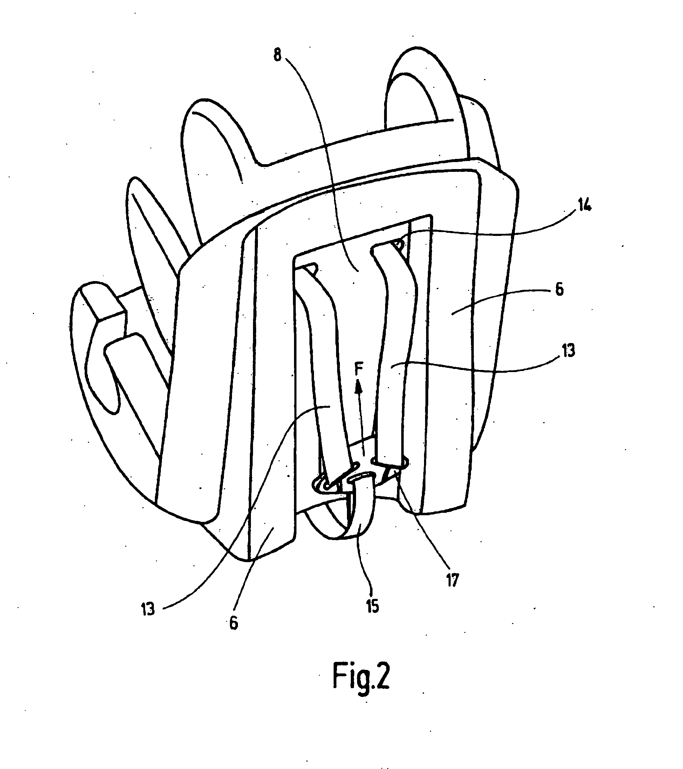

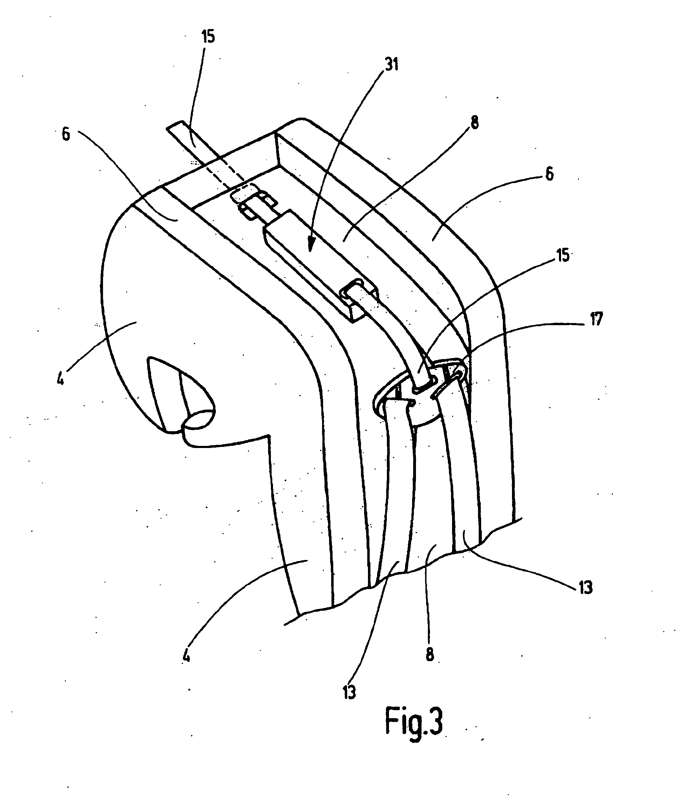

Im Kindersitz ist ein 5-Punkt Gurtsystem 10 integriert, das ein Gurtschloss 21 aufweist, welches fünf Gurtabschnitte untereinander verbindet. Der erste Gurtabschnitt ist ein Schrittgurt 11, der ausgehend vom Gurtschloss 21 zum vorderen Bereich der Sitzfläche 5 verläuft und an dieser befestigt ist. Zwei untere seitliche Gurtabschnitte, die Beckengurte 12, sind mit ihren unteren Enden jeweils im äußeren Bereich der Sitzfläche 5 verankert und verlaufen von dort aus zum Gurtschloss 21, wo sie durch je eine langlochförmige Durchführung 23a von zwei am Gurtschloss verriegelbaren Gurtzungen 23 hindurchgeführt sind. Im weiteren Verlauf gehen in den Durchführungen 23a die beiden Beckengurte 12 einteilig in jeweils einen von zwei Schultergurten 13 über, die die übrigen Gurtabschnitte des 5-Punkt-Gurtsystems 10 bilden. Die Schultergurte 13 sind im oberen Bereich der Lehne 3 durch zwei Durchführungen 14 der Lehne 3 hindurchgeführt und, wie in Fig. 2 zu erkennen ist, im Bereich der rückwärtigen Seite der Lehne 3 mittels eines Verbindungselements 17 miteinander gekoppelt. Ausgehend von diesem Verbindungselement 17 verläuft ein Verstellgurt 15 durch eine in Fig. 3 dargestellte Vertiefung 8 einer unterhalb der Sitzfläche 5 befindlichen und mit dieser einteilig verbundenen Sitzauflagefläche 6 und ist im vorderen Bereich der Sitzschalen-auflagefläche 6 durch diese hindurchgeführt. Hierzu ist im vorderen Bereich der Sitzfläche 5 eine Ausnehmung ausgebildet, in der eine an sich bekannte Gurtfestlegevorrichtung 16 angeordnet ist. Diese ermöglicht das Hindurchziehen des Verstellgurtes nur in Richtung der Vorderkante des Kindersitzes. In die andere Richtung lässt sich der Verstellgurt 15 nur durch Entriegeln der Gurtfestlegevorrichtung 16 ziehen.

Zum Ermöglichen des Ein- und Aussteigens des Kindes lassen sich durch Betätigen einer Entriegelungstaste des Gurtschlosses 21 die beiden Gurtzungen 23 aus diesem entnehmen und anschließend wieder in dieses einführen und verriegeln. Das am Kind anliegende Gurtsystem 10 kann durch Ziehen am Verstellgurt 15 gespannt und damit insbesondere an die Größe des Kindes angepasst werden. Dabei wird die effektive Länge der Schultergurte 13 zwischen den Durchführungen 23a der Gurtzungen 23 und den Durchführungen 14 der Lehne 3 verändert, so dass der Schrittgurt 11, die Beckengurte 12 sowie die Schultergurte 13 enger am Körper des Kindes anliegen.

Der Verstellgurt 15 wirkt mit einer Gurtstraffervorrichtung 31 zusammen, die ebenfalls in der Vertiefung 8 der Sitzschalenauflagefläche 6 angeordnet ist. In Fig. 3 ist diese Gurtstraffervorrichtung 31 schematisch und vereinfacht dargestellt. Zwei Ausführungsbeispiele werden nachfolgend beschrieben.

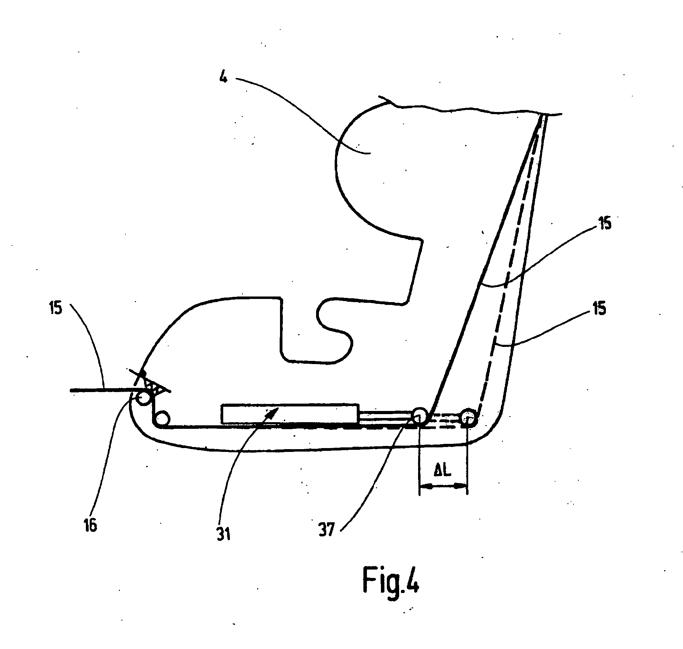

Fig. 4 zeigt eine schematische Darstellung des Verlaufs des Verstellgurtes 15 eines ersten Ausführungsbeispiels im Normalzustand und in gestrichelter Linie in ausgelöstem Zustand. Der Verstellgurt 15 wird an einer im hinteren Bereich der Vertiefung 8 positionierten ersten Gurtumlenkung 37 der Gurtstraffervorrichtung 31 umgelenkt. Ausgehend von der ersten Gurtumlenkung 37 verläuft ein Abschnitt des Verstellgurtes 15 frei beweglich zwischen der Gurtstraffervorrichtung 31 und der Sitzfläche 5 hindurch nach vorne zur Gurtfestlegevorrichtung 16 und ist dort fixiert. Der andere Abschnitt des Verstellgurtes 15 verläuft ausgehend von der ersten Gurtumlenkung 37 hinter der Lehne 3 nach oben und ist wie zuvor beschriebenen mit dem Verbindungselement 17 gekoppelt. '

Beim Auslösen der Gurtstraffervorrichtung 31 im Crashfall, wird die erste Gurtumlenkung 37 und somit der Umlenkpunkt des Verstellgurtes 15 um einen Hub Δ L nach hinten bewegt. Der Verstellgurtverlauf wird dadurch so verändert, dass die Gurtabschnittslänge des Gurtsystems 10 zwischen der Gurtfestlegevorrichtung 16 und den Durchführungen 14 der Schultergurte 13 durch die Lehne 3 verlängert wird. Da der Verstellgurt mittels der Gurtfestlegevorrichtung 16 fest fixiert ist, wird entsprechend Gurtband der Schultergurte 13 von der Vorderseite der Lehne 3 durch die Durchführungen 14 in Richtung der Rückseite der Lehne hindurchgezogen, so dass weniger Gurtband vor der Lehne 3 vorhanden ist. Dadurch wird die Gurtlose zwischen einem im Fahrzeugkindersitz 1 sitzenden Kind und dem 5-Punkt Gurtsystem 10 verkleinert bzw. eliminiert.

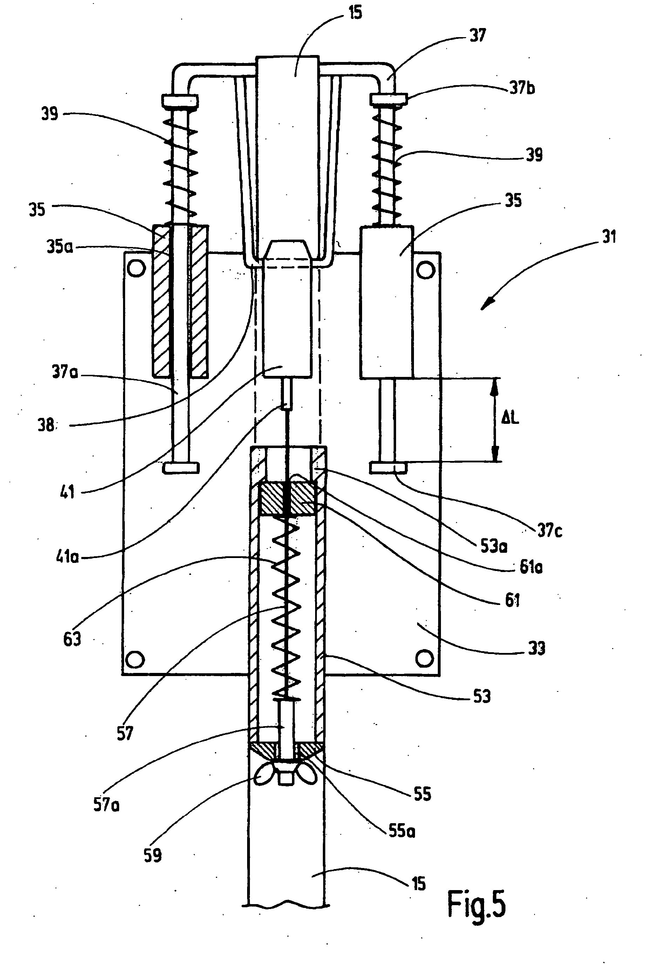

Nachfolgend ist das in Fig. 5 dargestellte erste Ausführungsbeispiel im Detail beschrieben. Eine unterhalb der Sitzfläche 5 in der Vertiefung 8 der Sitzschalenauflagefläche 6 fest mit der Sitzfläche 5 verbundene Trägerplatte 33 weist zwei fest mit dieser verbundene Führungen 35 auf. Die Führungen 35 sind jeweils mit einer Bohrung 35a versehen, die jeweils einen Schenkel 37a der im wesentlichen U-förmigen ersten Gurtumlenkung 37 aufnehmen und linear beweglich führen. Zwischen den Führungen 35 und je einem Absatz 37b der Schenkel 37 ist je ein Kraftspeicher 39 in Form einer Feder angeordnet. Vorzugsweise sind die Federn 39 Druckfedern, die von den Schenkeln 37a aufgenommen und gegen Ausknicken fixiert werden. Die beiden Federn 39 beaufschlagen die erste Gurtumlenkung und bewirken im ausgelösten Zustand der Gurtstraffervorrichtung 31 den Hub ΔL der ersten Gurtumlenkung in Richtung der ausgelösten Position. Als Hubbegrenzung dient jeweils ein zweiter Absatz 37c am Ende eines jeden Schenkels 37. Der zweite Absatz 37c besteht beispielsweise aus einer im Anschluss an die Montage der Federn 39 aufgequetschten zylindrischen Buchse

Zwischen den Schenkeln 37a der ersten Gurtumlenkung 37 ist ein Gegenelement 38 angeordnet und fest mit dieser verbunden. Das Gegenelement 38 hat die Form eines U mit leicht nach außen gebogenen Schenkeln und besteht vorzugsweise aus einem Material mit kreisrundem Querschnitt und einem Durchmesser von 6mm.

Ebenfalls fest mit der Trägerplatte 33 verbunden ist ein in etwa in Fahrtrichtung ausgerichtetes, insbesondere hohlzylindrisch ausgebildetes Gehäuse 53. Im Inneren des Gehäuses 53 ist eine Sensormasse 61 beweglich in diesem geführt. Die Sensormasse 61 weist im Mittelpunkt ihres insbesondere kreisförmigen Querschnittes eine Bohrung 61a auf, die parallel zur Zylinderausrichtung des Gehäuses 53 verläuft. Durch diese Bohrung 61a verläuft ein Seilzug 57, der mit seinem ersten Ende an einem Auslöser 41a eines an der Trägerplatte 33 befestigten Konnektors 41 befestigt ist. Der Konnektor 41 dient der Verriegelung der ersten Gurtumlenkung 37 in der Normalposition und ist eine allgemein als "ISOFIX-Konnektor" bekannte Verriegelungsvorrichtung, wie diese beispielsweise in der DE 198 48 231 A1 beschrieben ist. Grundsätzlich sind aber alle bekannten Verriegelungssysteme zur Verriegelung von Gegenelementen, wie beispielsweise Drehfallenschlösser, als Konnektor 41 geeignet. Der Konnektor 41, die erste Gurtumlenkung 37, deren Führung 35 und das Gegenelement 38 stellen die wesentlichen Elemente der Straffermechanik dar.

Das zweite Ende des Seilzugs 57 wird durch einen angeformten Gewindestangen-abschnitt 57a gebildet, der durch eine Bohrung eines Verschlusses 55 hindurchläuft, der das von der ersten Gurtumlenkung 37 abgewandte Ende des Gehäuses 53 verschließt. Der aus dem Gehäuse 53 bzw. dem Verschluss 55 herausragende Gewindestangenabschnitt 57a ist durch eine Flügelmutter 59 gesichert. Im Inneren des Gehäuses 53 stützt sich eine Sensorfeder 63 einerseits an der Stirnfläche der Gewindestange und andererseits an der Sensormasse 61 ab und spannt diese gegen einen Anschlag 53a des Gehäuses 53. Der Anschlag 53a wird vorzugsweise durch einen Durchmesserverkleinerung im Inneren des zylindrischen Gehäuses gebildet. Die Sensormasse 61 und die Sensorfeder 63 bilden gemeinsam die Auslösesensorik der Gurtstraffervorrichtung 31.

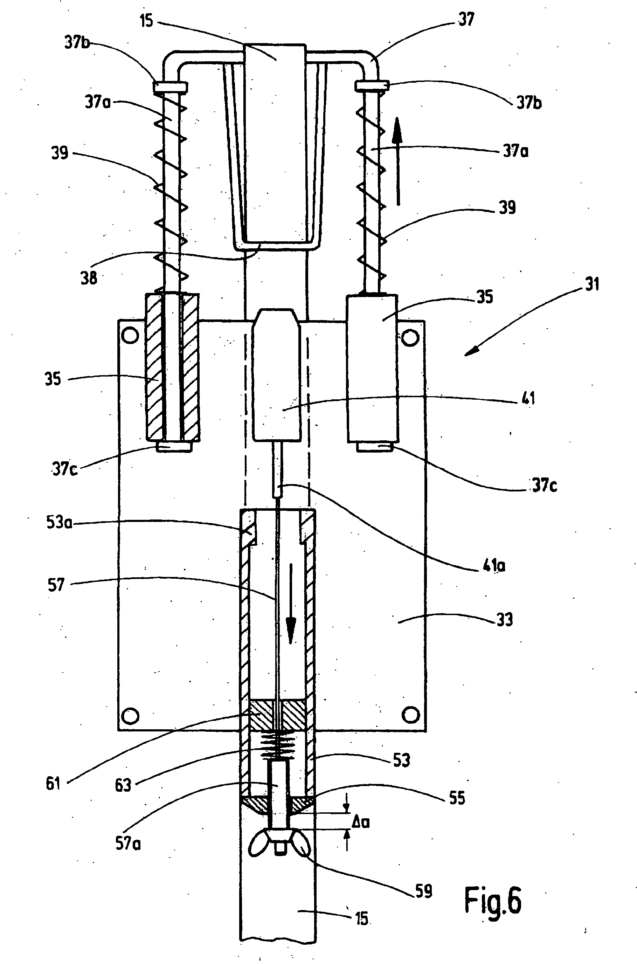

Im in Fig. 6 dargestellten Crashfall wird die Sensormasse 61 aufgrund von Beschleunigungskräften im Gehäuse in Fahrtrichtung, d.h. in Richtung des Verschlusses 55 bewegt und spannt dabei die Feder 63. Dadurch wird eine Kraft auf den Seilzug 57 übertragen. Sobald diese Kraft die Auslösekraft des Konnektors 41 überschreitet, erfolgt ein Auslösehub Δa des Auslösers 41a und das Gegenelement 38 und damit die erste Gurtumlenkung 37 wird freigegeben, die aufgrund der Kraft der sich nun entspannenden Federn 39 in die ausgelöste Position bewegt wird. Unter der Auslösekraft des Konnektors 41 ist diejenige Kraft zu verstehen, die auf den Auslöser 41a wirken muss, um Federkräfte und Reibung innerhalb des Konnektors 41 zu überwinden und diesen zu entriegeln. Die Masse der Sensormasse 61 und die Auslösekraft des Konnektors 41 stellen bei der konstruktiven Auslegung der Auslösesensorik die wesentlichen Stellgrößen für die Auslöseschwelle der Gurtstraffervorrichtung dar.

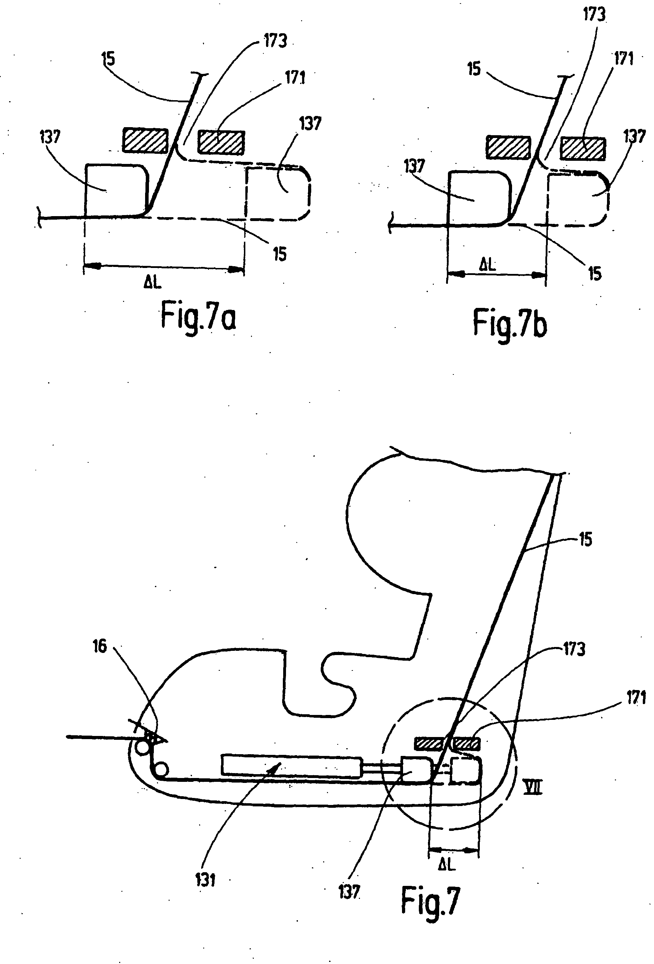

Fig. 7 und Fig. 7a zeigen eine schematische Darstellung des Verlaufs des Verstellgurtes 15 eines zweiten Ausführungsbeispiels im Normalzustand und in gestrichelter Linie in ausgelöstem Zustand. Der Verstellgurt 15 wird an einer im hinteren Bereich der Vertiefung 8 positionierten ersten Gurtumlenkung 137 der Gurtstraffervorrichtung 131 umgelenkt. Ausgehend von der ersten Gurtumlenkung 137 verläuft ein Abschnitt des Verstellgurtes 15 frei beweglich zwischen der Gurtstraffervorrichtung 131 und der Sitzfläche 5 hindurch nach vorne zur Gurtfestlegevorrichtung 16 und ist dort fixiert. Der andere Abschnitt des Verstellgurtes 15 verläuft ausgehend von der ersten Gurtumlenkung 137 durch eine insbesondere langlochförmige Öffnung 173 einer fest und somit unbeweglich mit dem Fahrzeugkindersitz 1 verbundene zweite Gurtumlenkung hinter der Lehne 3 nach oben und ist wie zuvor beschriebenen mit dem Verbindungselement 17 gekoppelt.

Beim Auslösen der Gurtstraffervorrichtung 131 wird die erste Gurtumlenkung 137 und somit der Umlenkpunkt des Verstellgurtes 15 um einen Hub ΔL relativ zur unbeweglichen zweiten Gurtumlenkung 171 nach hinten bewegt. Da der Verstellgurt 15 durch die Öffnung 173 der zweiten Gurtumlenkung 171 hindurchläuft, wird der Verstellgurt an der ersten Gurtumlenkung 137 vorzugsweise um etwa 150° bis 180° umgelenkt und läuft in entgegengesetzter Richtung bis zur Öffnung 173 der zweiten Gurtumlenkung 171. An dieser wird der Verstellgurt 15 erneut um vorzugsweise 80° bis 130° umgelenkt und verläuft hinter der Lehne 3 weiter nach oben. Der Verstellgurtverlauf wird dadurch insgesamt so umgelenkt, dass die Gurtabschnittslänge des Gurtsystems 10 zwischen der Gurtfestlegevorrichtung 16 und den Durchführungen 14 der Schultergurte 13 durch die Lehne 3 verlängert wird. Da der Verstellgurt mittels der Gurtfestlegevorrichtung 16 fest fixiert ist, wird entsprechend Gurtband der Schultergurte 13 von der Vorderseite der Lehne 3 durch die Durchführungen 14 in Richtung der Rückseite der Lehne hindurchgezogen, so dass wie im ersten Ausführungsbeispiel weniger Gurtband vor der Lehne 3 vorhanden ist. Die Anordnung von erster Gurtumlenkung 137 und zweiter Gurtumlenkung 171 bzw. deren Relativbewegung zueinander bewirken einen Flaschenzugeffekt, durch den der Hub des Verstellgurtes 15 hinter der zweiter Gurtumlenkung 171 ungefähr doppelt so groß ist wie der Hub ΔL der ersten Gurtumlenkung 137.

Fig 7b zeigt in schematischer Darstellung eine zusätzliche Gurtkraftbegrenzungsfunktion des zweiten Aufführungsbeispiels. Ein im Kindersitz angegurtetes Kind beaufschlagt im Crashfall während oder zeitlich unmittelbar nach der Gurtstraffung das Gurtsystem 10 mit einer Kraft F. Entsprechende Reaktionskräfte wirken über das Gurtsystem 10 auf den Körper des Kindes und werden wie nachfolgend beschrieben durch die Gurtkraftbegrenzungsfunktion begrenzt. Durch die zuvor beschriebene Anordnung von erster und zweiter Gurtumlenkung und dem daraus resultierenden Flaschenzugeffekt wirkt die Kraft F in doppelter Größe auf die erste Gurtumlenkung 137 in Richtung der ursprünglichen, unausgelösten Normalposition. Beim Überschreiten einer Grenzkraft F_{grenz} wird die erste Gurtumlenkung 137 solange zurückbewegt, bis die Grenzkraft F_{grenz} wieder unterschritten ist oder die Gurtumlenkung 137 wieder vollständig ihre Normalposition erreicht hat.

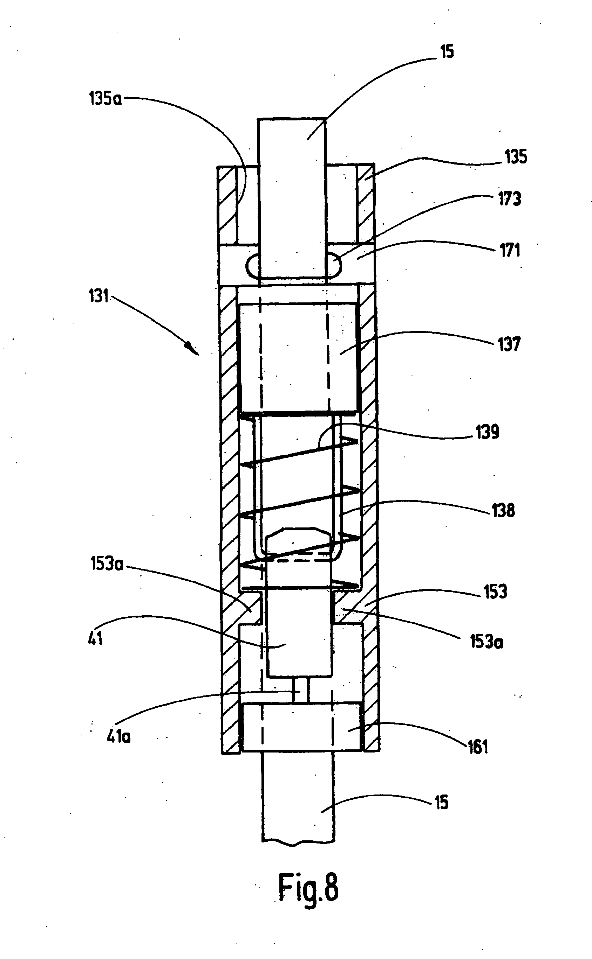

Nachfolgend ist das in Fig. 8 dargestellte zweite Ausführungsbeispiel im Detail beschrieben. Ein unterhalb der Sitzfläche 5 in der Vertiefung 8 der Sitzschalenauflagefläche 6 fest mit der Sitzfläche 5 verbundenes Gehäuse 153 weist eine mit diesem verbundene Führung 135 auf, in der die erste Gurtumlenkung 137 in Form eines Gleiters aufgenommen und linear verschiebbar geführt ist. Zwischen der ersten Gurtumlenkung 137 und einem Absatz 153a der Führung ist ein Kraftspeicher 139 in Form einer Feder angeordnet. Vorzugsweise sind die Federn 139 eine Druckfeder, die außen von der Führung 135 gegen Ausknicken fixiert wird. Die Feder139 beaufschlagt die erste Gurtumlenkung 137 und bewirkt im ausgelösten Zustand der Gurtstraffervorrichtung 31 den Hub ΔL der ersten Gurtumlenkung 137 in Richtung der ausgelösten Position.

Der Verstellgurt 15 wird durch die Öffnung 173 der zweite Gurtumlenkung 171 geführt, die mit dem Gehäuse 153 verbunden ist. Somit wird der zuvor beschriebene Gurtverlauf realisiert.

An der ersten Gurtumlenkung 137 ist ein Gegenelement 138 befestigt. Das Gegenelement 138 erstreckt sich im Inneren des Gehäuses 153 und hat die Form eines U mit Schenkeln, die parallel zur Führung 135 ausgebildet sind und deren Enden fest mit der ersten Gurtumlenkung 137 verbunden sind. Das Gegenelement 138 besteht vorzugsweise aus einem Material mit kreisrundem Querschnitt und einem Durchmesser von 6mm.

Im Gehäuse 153 befindet sich der fest an diesem angebundene Konnektor 41. Eine Sensormasse 161 ist unmittelbar am Auslöser 41a des Konnektors 41 befestigt, insbesondere angeschraubt. Innerhalb des Gehäuses 153 ist die Sensormasse 161 in Grenzen frei beweglich, so dass der notwendige Auslösehub Δa des Auslösers 41a ermöglicht wird. Eine der Sensorfeder 63 des ersten Ausführungsbeispiels entsprechende Sensorfeder entfällt beim zweiten Ausführungsbeispiel, so dass die Auslösesensorik im wesentlichen aus der Sensormasse 161 besteht. Der Konnektor 41, die erste Gurtumlenkung 137, deren Führung 135, das Gegenelement 138 und die zweite Gurtumlenkung 171 stellen die wesentlichen Elemente der Straffermechanik dar.

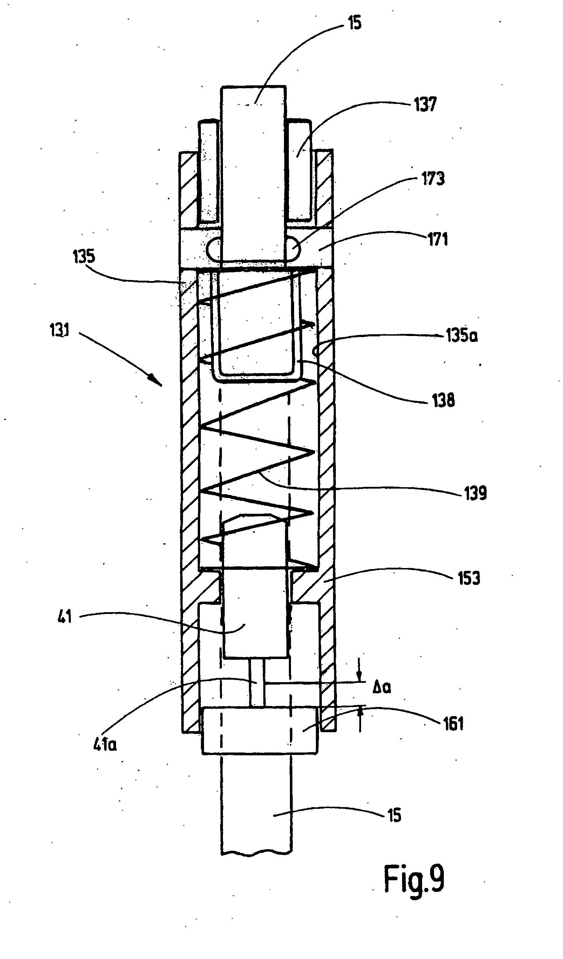

Im in Fig. 9 dargestellten Crashfall wirkt die Trägheitskraft der Sensormasse 161 direkt auf den Auslöser 41a. Sobald diese Kraft die Auslösekraft des Konnektors 41 überschreitet, öffnet dieser und gibt das Gegenelement 138 und somit die erste Gurtumlenkung 137 frei, die aufgrund der Kraft der sich nun entspannenden Federn 139 in die ausgelöste Position bewegt wird.

Nach der Auslösung der Gurtstraffervorrichtung 131 wird zur Wiederherstellung des Normalzustandes die erste Gurtumlenkung 137 entgegen der Kraft der Feder 139 in der Führung 135 soweit zurückgedrückt, bis das Gegenelement 138 wieder mit dem Konnektor 41 verriegelt. Somit ist der Fahrzeugkindersitz 1 und dessen Gurtstraffervorrichtung reversibel mehrfach nutzbar.

### Bezugszeichenliste

- 1: Fahrzeugkindersitz
- 3: Lehne
- 4: Seitenabstützung
- 5: Sitzfläche
- 6: Sitzschalenauflagefläche
- 8: Vertiefung
- 10: Gurtsystem
- 11: Schrittgurt
- 12: Beckengurt
- 13: Schultergurt
- 14: Durchführung
- 15: Verstellgurt
- 16: Gurtfestlegevorrichtung
- 17: Verbindungselement
- 21: Gurtschloss
- 23: Gurtzunge
- 23a: Durchführung
- 31, 131: Gurtstraffervorrichtung
- 33: Trägerplatte
- 35, 135: Führung
- 35a, 135a: Bohrung
- 37,137 erste: Gurtumlenkung
- 37a: Schenkel
- 37b: erster Absatz
- 37b: zweiter Absatz
- 38,138: Gegenelement
- 39, 139: Kraftspeicher
- 41: Konnektor
- 41a: Auslöser
- 53, 153: Gehäuse
- 53a, 153a: Anschlag
- 55: Verschluss
- 55a: Durchgangsloch
- 57: Seilzug
- 57a: Gewindestange
- 59: Flügelmutter
- 61, 161: Sensormasse
- 61a: Bohrung
- 63: Sensorfeder
- 171: zweite Gurtumlenkung
- 173: Öffnung
- Δa: Auslösehub
- ΔL: Hub
- F: Gurtkraft
- F_{grenz}: Grenzkraft

## Patentansprüche

1. Fahrzeugkindersitz zum direkten oder mittelbaren Befestigen an einem Fahrzeugsitz und/oder einer Fahrzeugstruktur, mit einer Lehne (3), einer Sitzfläche (5), einem integrierten Gurtsystem (10) zum Fixieren eines Kindes im Fahrzeugkindersitz (1) und einer eine Auslösesensorik (61, 161, 63), einen Kraftspeicher (39, 139) und eine Straffermechanik (41, 35, 135, 37, 137, 38, 138) umfassenden Gurtstraffervorrichtung (31), die bei einem Überschreiten einer definierten, auf den Fahrzeugkindersitz (1) wirkenden Kraft, insbesondere Crashkraft, das Gurtsystem (10) schlagartig strafft, wobei
sämtliche für eine Gurtstrafferfunktion notwendigen Bauteile der Gurtstraffervorrichtung (31) am oder im Fahrzeugkindersitz (1) befestigt und mit diesem aus einem Fahrzeug entnehmbar sind,
**dadurch gekennzeichnet, dass**
in der Gurtstraffervorrichtung (31) eine Gurtkraftbegrenzungsfunktion integriert ist und nach einem Auslösen der Gurtstraffervorrichtung (31) beim Überschreiten einer Grenzkraft F_{grenz} auf einen Gurtabschnitt (11, 12,13, 15) des integrierten Gurtsystems (10) mindestens eine Gurtumlenkung (137, 171) so weit in Richtung ihrer Normalposition verschoben wird, bis die Grenzkraft F_{grenz} unterschritten wird oder die Gurtumlenkung (137, 171) vollständig ihre Normalposition erreicht hat.

2. Fahrzeugkindersitz nach Anspruch 1, **dadurch gekennzeichnet, dass** die Auslösesensorik eine Sensormasse (61, 161) umfasst, deren Trägheitskraft im Crashfall auf die Straffermechanik (35, 135, 37, 137, 38, 138) einwirkt und die Gurtstraffervorrichtung (31) auslöst.

3. Fahrzeugkindersitz nach Anspruch 1 oder 2, **dadurch gekennzeichnet, dass** der Kraftspeicher (39, 139) aus einer oder mehreren Federn besteht.

4. Fahrzeugkindersitz nach einem der vorhergehenden Ansprüche, **dadurch gekennzeichnet, dass** die Straffermechanik eine vom Kraftspeicher (39, 139) beaufschlagte erste Gurtumlenkung (37, 137) aufweist, die einen Gurtabschnitt (11, 12, 13, 15) des Gurtsystems 10 umlenkt und im Crashfall aus einer Normalposition in eine Crashposition verfahren wird.

5. Fahrzeugkindersitz nach Anspruch 4, **dadurch gekennzeichnet, dass** die Straffermechanik eine zweite Gurtumlenkung (171) umfasst, die den Gurtabschnitt (11, 12, 13, 15) zusätzlich umlenkt.

6. Fahrzeugkindersitz nach Anspruch 5, **dadurch gekennzeichnet, dass** der Gurtabschnitt (11, 12, 13, 15), die erste Gurtumlenkung (137) und die zweite Gurtumlenkung (171) einen Flaschenzug bilden.

7. Fahrzeugkindersitz nach einem der vorhergehenden Ansprüche, **dadurch gekennzeichnet, dass** die Straffermechanik einen Konnektor (41) zur Verriegelung eines beweglichen Gegenelementes (38, 138) der ersten Gurtumlenkung (37, 137) umfasst.

8. Fahrzeugkindersitz nach Anspruch 7, **dadurch gekennzeichnet, dass** der Konnektor (41) im Aufbau einem ISOFIX-Konnektor entspricht und über einen Auslöser (41 a) entriegelbar ist.

9. Fahrzeugkindersitz nach Anspruch 8, **dadurch gekennzeichnet, dass** die Sensormasse (61, 161) direkt oder mittelbar am Auslöser (41a) angebracht ist.

10. Fahrzeugkindersitz nach einem der vorhergehenden Ansprüche, **dadurch gekennzeichnet, dass** die Auslösesensorik (61, 161, 63), der Kraftspeicher (39, 139) und die Straffermechanik (41, 35, 135, 37, 137, 38, 138) in und/oder an einem einzigen Gehäuse (53, 153) untergebracht oder angebracht sind.

## Claims

1. Vehicle child seat for directly or indirectly fastening to a vehicle seat and/or a vehicle structure, comprising a backrest (3), a seat surface (5), an integrated belt system (10) for fastening a child in the vehicle child seat (1) and a belt tensioning device (31) comprising a trigger sensor (61, 161, 63), an energy storage device (39, 139) and a tensioning mechanism (41, 35, 135, 37, 137, 38, 138) which, in the event of an exceedance of a defined force acting on the vehicle child seat (1), in particular a crash force, abruptly tensions the belt system (10),
all components of the belt tensioning device (31) required for a belt tensioning function being fastened to or in the vehicle child seat (1) and being removable therewith from a vehicle, **characterized in that** a belt force limiting function is incorporated in the belt tensioning device (31), and after a triggering of the belt tensioning device (31) in the event of the exceedance of a limit force F_{grenz} on a belt portion (11, 12, 13, 15) of the integrated belt system (10), at least one belt deflector (137, 171) is displaced sufficiently far in the direction of its normal position, so that the limit force F_{grenz} is undershot or the belt deflector (137, 171) has completely reached its normal position.

2. Vehicle child seat according to Claim 1, **characterized in that** the trigger sensor comprises a sensor mass (61, 161), the inertia force thereof in the event of a crash acting on the tensioning mechanism (35, 135, 37, 137, 38, 138) and triggering the belt tensioning device (31).

3. Vehicle child seat according to Claim 1 or 2, **characterized in that** the energy storage device (39, 139) consists of one or more springs.

4. Vehicle child seat according to one of the preceding claims, **characterized in that** the tensioning mechanism comprises a first belt deflector (37, 137) acted upon by the energy storage device (39, 139), which deflects a belt portion (11, 12, 13, 15) of the belt system (10) and in the event of a crash is moved from a normal position into a crash position.

5. Vehicle child seat according to Claim 4, **characterized in that** the tensioning mechanism comprises a second belt deflector (171) which additionally deflects the belt portion (11, 12, 13, 15) .

6. Vehicle child seat according to Claim 5, **characterized in that** the belt portion (11, 12, 13, 15), the first belt deflector (137) and the second belt deflector (171) form a pulley block.

7. Vehicle child seat according to one of the preceding claims, **characterized in that** the tensioning mechanism comprises a connector (41) for locking a movable counter element (38, 138) of the first belt deflector (37, 137).

8. Vehicle child seat according to Claim 7, **characterized in that** the connector (41) corresponds in construction to an ISOFIX connector and is unlockable by a trigger (41a).

9. Vehicle child seat according to Claim 8, **characterized in that** the sensor mass (61, 161) is attached directly or indirectly to the trigger (41a).

10. Vehicle child seat according to one of the preceding claims, **characterized in that** the trigger sensor (61, 161, 63), the energy storage device (39, 139) and the tensioning mechanism (41, 35, 135, 37, 137, 38, 138) are accommodated or attached in and/or at a single housing (53, 153).

## Revendications

1. Siège d'enfant de véhicule destiné à être fixé directement ou indirectement à un siège de véhicule et/ou une structure de véhicule, comprenant un dossier (3), une surface de siège (5), un système de sangle (10) intégré pour attacher un enfant dans le siège d'enfant de véhicule (1) et un dispositif tendeur de sangle (31) comprenant un capteur de déclenchement (61, 161, 63), un accumulateur de force (39, 139) et un mécanisme tendeur (41, 35, 135, 37, 137, 38, 138), qui, dans le cas d'un dépassement d'une force définie, agissant sur le siège d'enfant de véhicule (1), en particulier une force de collision, tend brusquement le système de sangle (10),
tous les composants, nécessaires pour une fonction de tendeur de sangle, du dispositif tendeur de sangle (31) étant fixés au ou dans le siège d'enfant de véhicule (1) et étant enlevables avec ce siège de véhicule,
**caractérisé en ce qu'**
une fonction de limitation de force de sangle est intégrée dans le dispositif tendeur de sangle (31) et, après un déclenchement du dispositif tendeur de sangle (31), lors du dépassement d'une force limite F_{grenz} agissant sur une partie de sangle (11, 12, 13, 15) du système de sangle intégré (10), au moins une déflexion de sangle (137, 171) est décalée en direction de sa position normale jusqu'à ce qu'elle soit en-dessous de la force limite F_{grenz} ou que la déflexion de sangle (137, 171) ait atteint complètement sa position normale.

2. Siège d'enfant de véhicule selon la revendication 1, **caractérisé en ce que** le capteur de déclenchement comprend une masse de capteur (61, 161), dont la force d'inertie agit en cas de collision sur le mécanisme tendeur (35, 135, 37, 137, 38, 138) et déclenche le dispositif tendeur de sangle (31).

3. Siège d'enfant de véhicule selon la revendication 1 ou 2, **caractérisé en ce que** l'accumulateur de force (39, 139) comprend un ou plusieurs ressorts.

4. Siège d'enfant de véhicule selon l'une des revendications précédentes, **caractérisé en ce que** le mécanisme tendeur présente une première déflexion de sangle (37, 137), sollicitée par l'accumulateur de force (39, 139), qui dévie une partie de sangle (11, 12, 13, 15) du système de sangle (10) et est déplacée en cas de collision d'une position normale dans une position de collision.

5. Siège d'enfant de véhicule selon la revendication 4, **caractérisé en ce que** le mécanisme tendeur comprend une seconde déflexion de sangle (171), qui défleche en supplément la partie de sangle (11, 12, 13, 15).

6. Siège d'enfant de véhicule selon la revendication 5, **caractérisé en ce que** la partie de sangle (11, 12, 13, 15), la première déflexion de sangle (137) et la seconde déflexion de sangle (171) forment un palan.

7. Siège d'enfant de véhicule selon l'une des revendications précédentes, **caractérisé en ce que** le mécanisme tendeur comprend un connecteur (41) pour verrouiller un contre-élément (38, 138) mobile de la première déflexion de sangle (37, 137).

8. Siège d'enfant de véhicule selon la revendication 7, **caractérisé en ce que** le connecteur (41) correspond dans sa structure à un connecteur ISOFIX et est déverrouillable au moyen d'un déclencheur (41a).

9. Siège d'enfant de véhicule selon la revendication 8, **caractérisé en ce que** la masse de capteur (61, 161) est placée directement ou indirectement au déclencheur (41a).

10. Siège d'enfant de véhicule selon l'une des revendications précédentes, **caractérisé en ce que** le capteur de déclenchement (61, 161, 63), l'accumulateur de force (39, 139) et le mécanisme tendeur (41, 35, 135, 37, 137, 38, 138) sont logés ou placés dans et/ou à une seule boîte (53, 153).
